# EUROPEAN PATENT APPLICATION

(11) **EP 4 809 966 A1**
(43) Date of publication of application: **23.09.2026**
(21) Application number: 26164767.1
(22) Date of filing: 13.03.2026
(51) Int. Cl.: A61C 1/00, A61C 1/08, A61C 3/025, A61C 17/20

(54) **FLOW PATH CLEANING METHOD FOR PREVENTIVE DENTAL DEVICE, AND PREVENTIVE DENTAL DEVICE**

(30) Priority: 19.03.2025 JP 2025046001
(71) Applicant: Nakanishi Inc., Kanuma-shi, Tochigi 322-8666 (JP)
(72) Inventor: YAMADA, Kensuke, Tochigi, 3228666 (JP); TOCHIGI, Manami, Tochigi, 3228666 (JP); KOJIMA, Shunsuke, Tochigi, 3228666 (JP)
(74) Representative: Lewis Silkin LLP

(57) **Abstract**

A flow path cleaning method for a preventive dental device is provided. The device includes a mixer having a powder storage portion storing a tooth surface cleaning powder, a handpiece having a nozzle portion, and a control unit. The mixer feeds compressed air to the powder storage portion to generate powder mixed gas and supplies the powder mixed gas to the nozzle portion through an internal air feeding path and an external air feeding path. The method includes an automatic cleaning process for cleaning the internal air feeding path and the external air feeding path. When an execution request of the automatic cleaning process is input to the control unit, compressed air is fed to the powder storage portion after stored powder has been removed, and the compressed air is discharged from the nozzle portion after flowing through the internal air feeding path and the external air feeding path.

## Description

### TECHNICAL FIELD

The present invention relates to a flow path cleaning method for a preventive dental device, and a preventive dental device.

### BACKGROUND ART

A preventive dental device is known in which tooth-surface-cleaning powder stored in a container is mixed with compressed air to generate a powder-air mixture, and the powder-air mixture and water are injected onto a tooth surface from a nozzle provided at a tip of a tooth surface cleaning handpiece to clean the tooth surface (for example, JP2008-229340A). In such a preventive dental device, it is necessary to clean a flow path of a liquid feeding path for each patient in order to prevent growth of various bacteria.

To address this, in the preventive dental device in the related art, an automatic washing mode for the liquid feeding path is provided, and the flow path of the liquid feeding path is cleaned when a user presses an automatic washing start button.

On the other hand, in order to clean the flow path of the air feeding path of the powder mixed gas, the user removes a mixer from the device body to clean an inside of a container, mounts the cleaned empty container on the device body again, and supplies the compressed air to the air feeding path (i.e., ventilates the air feeding path), thereby cleaning the flow path of the air feeding path through which the powder mixed gas passes.

### SUMMARY OF INVENTION

However, the cleaning of the flow path of the air feeding path of the powder mixed gas takes time and effort, and in addition, the ventilation is not sufficient for the user, and thus the powders remain in a valve or the like in the device, which causes powder clogging in the air feeding path.

Therefore, an object of the present invention is to provide a flow path cleaning method for a preventive dental device, and a preventive dental device that can easily and reliably prevent powder clogging in an air feeding path for a powder mixed gas in the preventive dental device.

The present invention has the following configurations.
(1) A flow path cleaning method for a preventive dental device, the preventive dental device including a mixer configured to feed compressed air to a powder storage portion storing a tooth surface cleaning powder and generate a powder mixed gas containing the powder in the powder storage portion, a handpiece connected to the mixer and having a nozzle portion configured to inject the powder mixed gas fed from the powder storage portion, and a control unit configured to control the feeding of the compressed air to the powder storage portion, the preventive dental device cleaning a tooth surface by injecting the powder mixed gas, the method including: an automatic cleaning process including an air feeding path cleaning processing of cleaning an internal air feeding path configured to feed the powder mixed gas from an inside of the powder storage portion and an external air feeding path configured to feed the powder mixed gas fed out from the internal air feeding path to the nozzle portion of the handpiece, in which, the method further includes:
   when an execution request of the automatic cleaning process is input to the control unit,
   feeding the compressed air to the powder storage portion from which the stored powder is removed; and
   discharging the compressed air out of the nozzle portion of the handpiece, the compressed air having flowed from the powder storage portion through the internal air feeding path and the external air feeding path.
(2) A preventive dental device including: a mixer configured to feed compressed air to a powder storage portion storing a tooth surface cleaning powder and generate a powder mixed gas containing the powder in the powder storage portion; a handpiece connected to the mixer and having a nozzle portion configured to inject the powder mixed gas fed from the powder storage portion; and a control unit configured to control the feeding of the compressed air to the powder storage portion, in which
   the preventive dental device further includes: an internal air feeding path configured to feed the powder mixed gas from an inside of the powder storage portion; and an external air feeding path configured to feed the powder mixed gas fed out from the internal air feeding path to the nozzle portion of the handpiece, and
   the control unit supplies the compressed air to the powder storage portion from which the stored powder is removed, and discharges the compressed air from the powder storage portion through the internal air feeding path and the external air feeding path and out of the nozzle portion of the handpiece, when an execution request of an automatic cleaning process including an air feeding path cleaning processing of cleaning the internal air feeding path and the external air feeding path is input.

According to the present invention, it is possible to easily and reliably prevent the powder clogging in the air feeding path of the powder mixed gas in the preventive dental device.

### BRIEF DESCRIPTION OF DRAWINGS

FIG. 1 is an overall configuration diagram of a preventive dental device according to an embodiment;
FIG. 2 is a diagram schematically illustrating a usage form of a tooth surface cleaning handpiece and a structure of a nozzle portion;
FIG. 3 is a diagram schematically illustrating a usage form of a dental calculus removing handpiece;
FIG. 4 is a diagram illustrating a mechanism for attaching and detaching a mixer and a liquid container disposed on a back side of the body portion;
FIG. 5 is a side view of a mixer;
FIG. 6 is a cross-sectional view of a powder storage portion taken along an up-down direction;
FIG. 7 is a schematic block diagram of the preventive dental device;
FIG. 8 is a flowchart illustrating a processing procedure from cleaning a tooth surface by a user to executing a subsequent automatic cleaning process;
FIG. 9 is a diagram illustrating an on/off pattern for feeding compressed air in an air feeding path cleaning processing;
FIG. 10 is a diagram illustrating a state in which an identifier provided in the mixer is detected by a detection unit provided in the body portion of the preventive dental device; and
FIG. 11 is a circuit diagram illustrating a pipe configuration in which functional components are added to a basic configuration of the preventive dental device illustrated in FIG. 7.

### DESCRIPTION OF EMBODIMENTS

Hereinafter, an embodiment of a preventive dental device according to the present invention will be described in detail with reference to the drawings. The preventive dental device described here includes a tooth surface cleaning handpiece that cleans a tooth surface by injecting water and a powder mixed gas containing tooth surface cleaning powders toward the tooth surface, and a dental calculus removing handpiece that transmits ultrasonic vibration to a tip portion of a probe and injects water to crush and remove dental calculus. A configuration of the preventive dental device is not limited thereto, and may be another configuration such as a configuration including only the tooth surface cleaning handpiece.

### {Configuration of Preventive Dental Device}

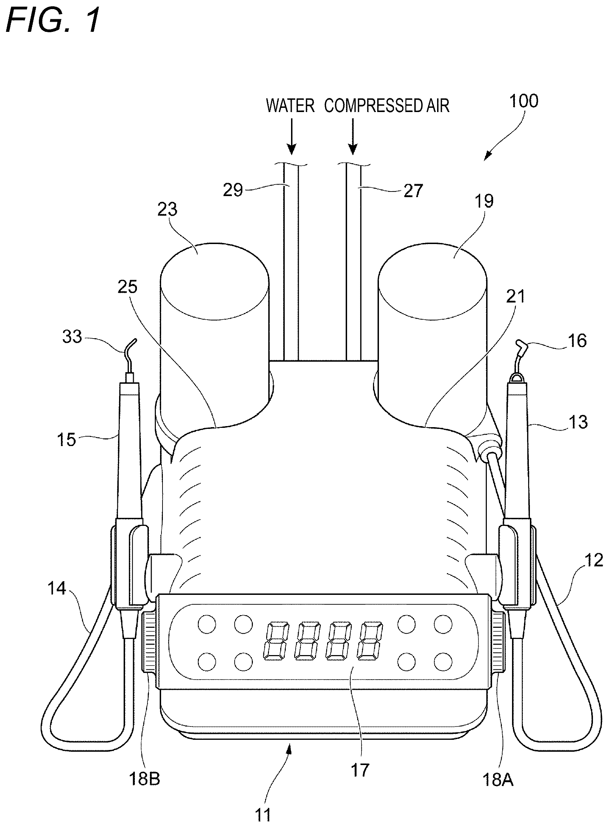

FIG. 1 is an overall configuration diagram of a preventive dental device 100 according to an embodiment. The preventive dental device 100 includes a body portion 11, a tooth surface cleaning handpiece 13 connected to the body portion 11 via a hose 12, and a dental calculus removing handpiece 15 connected to the body portion 11 through a hose 14. The body portion 11 includes a display operation unit 17, flow rate adjustment knobs 18A and 18B, a mixer mounting portion 21 on which the mixer 19 that stores tooth surface cleaning powders is mounted, and a liquid container mounting portion 25 on which the liquid container 23 that stores a liquid to be supplied to the dental calculus removing handpiece 15 is mounted.

The display operation unit 17 includes a monitor that displays an operation state and the like of the preventive dental device 100, a button that receives an input from a user, and the like. The flow rate adjustment knob 18A can adjust a liquid feeding amount to the tooth surface cleaning handpiece 13, and the flow rate adjustment knob 18B can adjust a liquid feeding amount to the dental calculus removing handpiece 15.

The mixer 19 and the liquid container 23 can be attached to and detached from the body portion 11. The body portion 11 is connected to a compressed air supply path 27 that supplies compressed air, and a liquid supply path 29 that supplies tap water or a liquid such as water or a chemical solution stored in a tank (not illustrated).

The mixer 19 mixes the compressed air supplied from the compressed air supply path 27 and powders stored therein to generate a tooth surface cleaning powder mixed gas.

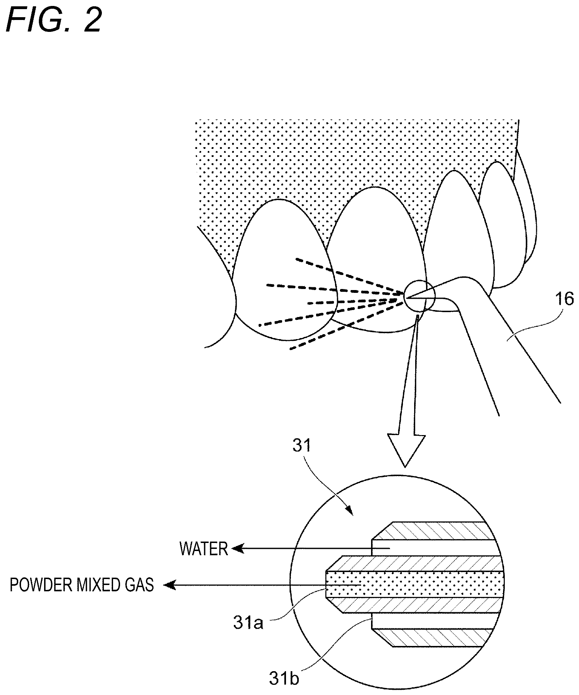

FIG. 2 is a diagram schematically illustrating a usage form of the tooth surface cleaning handpiece 13 and a structure of a nozzle portion. A tip 16 attached to a tip of the tooth surface cleaning handpiece 13 is provided with a nozzle portion 31 that injects the fed powder mixed gas and the liquid supplied from the liquid supply path 29. The nozzle portion 31 has a gas injection port 31a that injects the powder mixed gas at a center thereof, and an annular liquid injection port 31b that is provided on an outer periphery of the gas injection port 31a and injects the liquid. The powder mixed gas fed from the mixer 19, and the liquid are injected from the nozzle portion 31 toward the tooth surface in a spray form, thereby being used for removing dirt attached to the tooth surface.

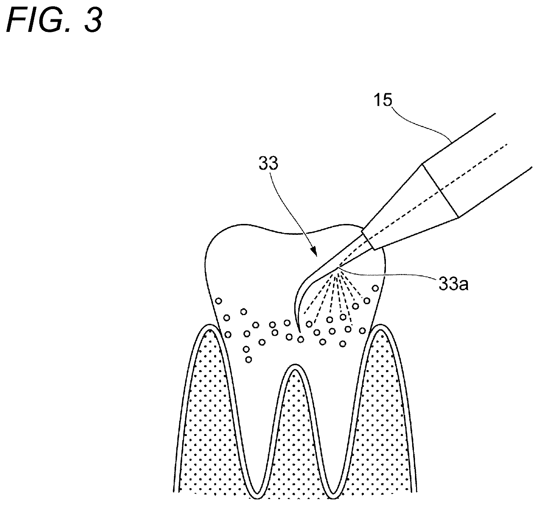

FIG. 3 is a diagram schematically illustrating a usage form of the dental calculus removing handpiece 15. A scaler tip 33 having, for example, a liquid injection port 33a is attached to a tip of the dental calculus removing handpiece 15. The dental calculus removing handpiece 15 is used for removing dental calculus, stain, and the like attached to teeth by, for example, ejecting the liquid from the injection port 33a while applying ultrasonic vibration to the scaler tip 33.

### {Connection of Mixer to Body Portion}

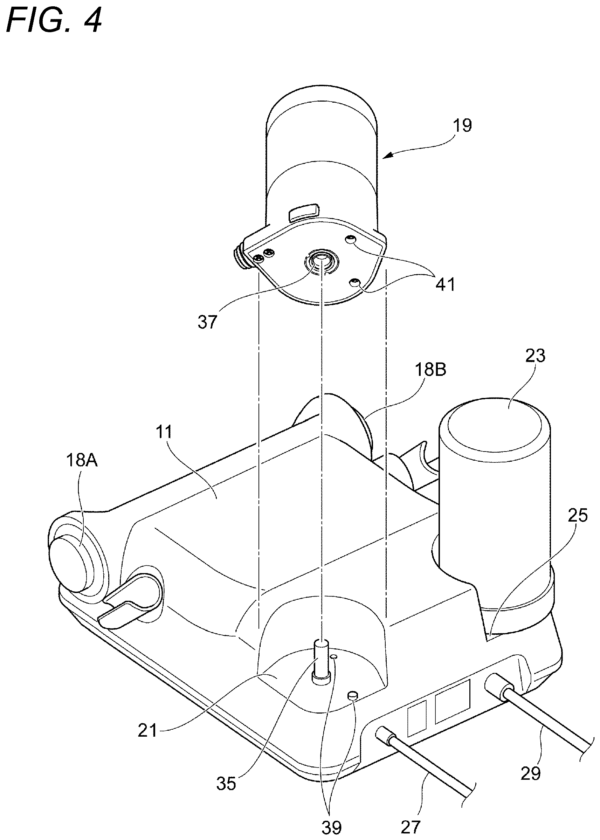

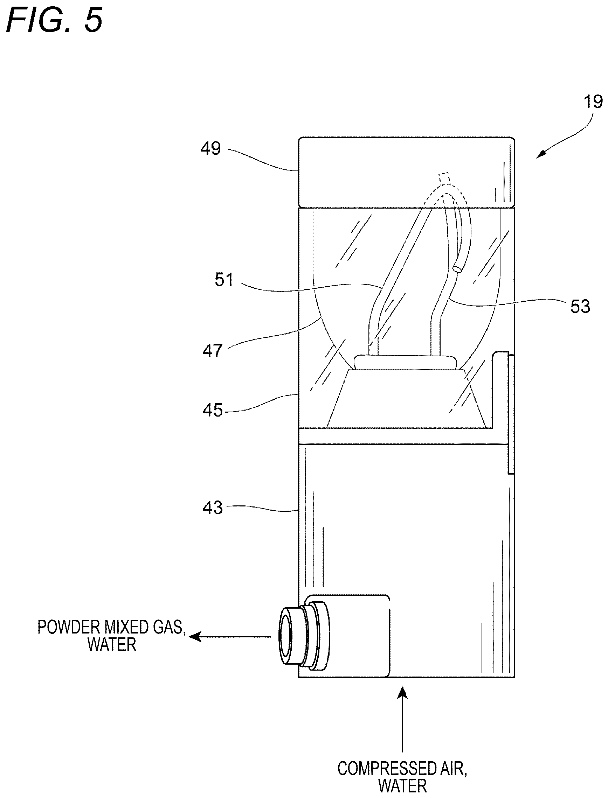

FIG. 4 is a diagram illustrating a mechanism for attaching and detaching the mixer 19 and the liquid container 23 disposed on a back side of the body portion 11. The body portion 11 includes the mixer mounting portion 21 and the liquid container mounting portion 25 on the back side thereof. A mixer connection portion 35 that supplies the compressed air to the mixer 19 is provided protruding upward in the mixer mounting portion 21. The mixer connection portion 35 is inserted into an insertion port 37 provided at a bottom portion of the mixer 19, and supplies the compressed air from the compressed air supply path 27 to a powder storage portion 47 (FIG. 5) to be described later.

One or a plurality of projection pieces 39 protruding upward are provided at predetermined positions of the mixer mounting portion 21. In addition, engagement holes 41 are formed in the bottom portion of the mixer 19 at positions corresponding to the projection pieces 39. When the mixer 19 is mounted on the mixer mounting portion 21, the projection pieces 39 and the engagement holes 41 are engaged with each other to regulate a rotational position of the mixer 19. Although not illustrated, the liquid container 23 is provided with a liquid supply connection portion that supplies the liquid to a bottom portion of the liquid container 23 in a protruding manner, and is connected to a connection port provided in the liquid container mounting portion 25 when the liquid container 23 is mounted on the body portion 11, and the liquid in the liquid container 23 is supplied to the body portion 11.

FIG. 5 is a side view of the mixer 19. The mixer 19 is formed in a cylindrical shape as a whole. A valve or a pipe (not illustrated) is disposed inside a lower case 43 below the mixer 19. The powder storage portion 47 that stores powders, and a lid 49 that closes an opening of the powder storage portion 47 are disposed inside an upper case 45 above the mixer 19. An air feeding pipe 51 and a mixed gas discharge pipe 53 are provided inside the powder storage portion 47 so as to extend from a bottom portion.

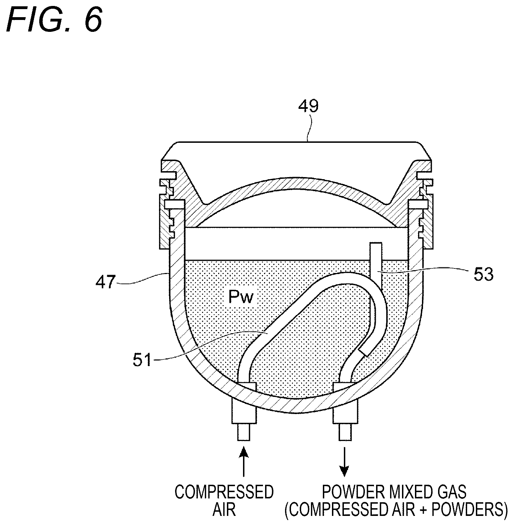

FIG. 6 is a cross-sectional view of the powder storage portion 47 taken along an up-down direction. Powders Pw are stored inside the powder storage portion 47. When the compressed air is fed from an outlet of the air feeding pipe 51 to the powder storage portion 47, the powders Pw are stirred by a flow of the compressed air in the powder storage portion 47, and a powder mixed gas is generated in the powder storage portion 47. The generated powder mixed gas is discharged from the powder storage portion 47 through the mixed gas discharge pipe 53, and is fed toward the tooth surface cleaning handpiece 13.

### {Internal Configuration and Basic Operation of Preventive Dental Device}

Next, an internal configuration and an operation example of the preventive dental device 100 having the above-described configuration will be described with reference to a block diagram.

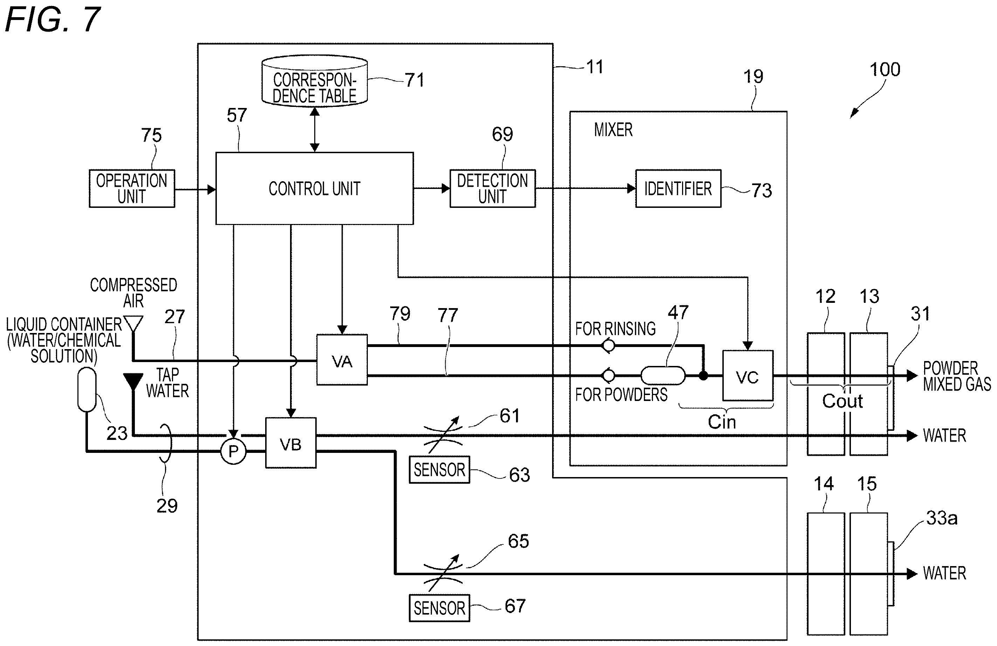

FIG. 7 is a schematic block diagram of the preventive dental device 100.

The mixer 19 includes the powder storage portion 47, a control valve VC, and an identifier 73.

The body portion 11 of the preventive dental device 100 includes a control unit 57, a pump P, control valves VA and VB, flow rate adjusting valves 61 and 65, valve opening degree sensors 63 and 67, a detection unit 69, and a correspondence table 71.

The flow rate adjusting valves 61 and 65 that adjust a flow rate of the water or the chemical solution are, for example, needle valves, and valve opening degrees are changed by the user rotating the flow rate adjustment knobs 18A and 18B (FIG. 1). The valve opening degree sensors 63 and 67 detect the valve opening degrees of the flow rate adjusting valves 61 and 65.

The detection unit 69 detects the identifier 73 provided in the mixer 19.

The control valve VA is connected to a first air feeding path 77 that feeds air to the powder storage portion 47 in the mixer 19 and a second air feeding path 79 that feeds air bypassing the powder storage portion 47. By feeding the compressed air to the first air feeding path 77, the compressed air from the air feeding pipe 51 in the powder storage portion 47 illustrated in FIG. 6 stirs the powders in the powder storage portion 47 to generate a powder mixed gas. The generated powder mixed gas is fed from the mixed gas discharge pipe 53 and an outlet of the mixed gas discharge pipe 53 to the nozzle portion 31 of the tooth surface cleaning handpiece 13 through the hose 12, and the powder mixed gas is injected from the nozzle portion 31.

On the other hand, when the compressed air is supplied to the second air feeding path 79, only the compressed air is ejected from the nozzle portion 31 of the tooth surface cleaning handpiece 13. The injection of only the compressed air is mainly used for confirming a cleaning state of a tooth surface during cleaning the tooth surface, and is used for a rinsing processing of blowing off water or powders remaining on the tooth surface of a patient. The control valve VC in the mixer 19 starts and stops supplying air to the tooth surface cleaning handpiece 13.

An operation unit 75, such as a foot switch or the display operation unit 17 (FIG. 1), is connected to the control unit 57 to receive an operation instruction from the user.

The control unit 57 is a computer device, and includes, for example, a processor such as a central processing unit (CPU) or a micro processing unit (MPU), and a storage device including a memory such as a read only memory (ROM) or a random access memory (RAM). The control unit 57 implements various functions by reading and executing a program stored in the storage device.

The correspondence table 71 stores data to be used in liquid-path washing processing and air-path cleaning processing to be described later. The correspondence table 71 stores, for each type or individual of the handpieces 13 and 15 and/or the mixer 19, liquid feeding condition information such as appropriate ON and OFF times of the control valve VB, and air feeding condition information such as appropriate ON and OFF times of the control valve VC and the number of repetitions of an ON/OFF pattern.

In the preventive dental device 100, according to an input instruction from the operation unit 75, the control unit 57 feeds the supplied compressed air to the powder storage portion 47 through the control valve VA to generate a powder mixed gas inside the powder storage portion 47, and controls the control valve VC to inject the generated powder mixed gas from the nozzle portion 31 of the tooth surface cleaning handpiece 13. Here, an air feeding path through which the powder mixed gas from the powder storage portion 47 to a connection portion between the mixer 19 and the hose 12 flows through the control valve VC is referred to as an internal air feeding path Cᵢₙ, and an air feeding path through which the powder mixed gas from the hose 12 to the nozzle portion 31 of the tooth surface cleaning handpiece 13 flows is referred to as an external air feeding path Cₒᵤₜ. In addition, the internal air feeding path Cᵢₙ and the external air feeding path Cₒᵤₜ are also referred to as powder flow paths.

The tap water or the water supplied from the liquid container 23 is fed to the control valve VB through the liquid supply path 29. In the present specification, the liquid supply path 29 includes a liquid feeding system extending to the nozzle portion 31 via the control valve VB. The water supplied to the control valve VB is ejected from either the nozzle portion 31 of the tooth surface cleaning handpiece 13 or the injection port 33a of the dental calculus removing handpiece 15 through the control valve VB controlled according to an input instruction from the operation unit 75.

By a setting operation from the display operation unit 17, the user can use the tooth surface cleaning handpiece 13 to perform a prophy mode in which the powder mixed gas and the water are injected toward, for example, the tooth surface of the patient, or a periodontal mode in which the tooth surface cleaning handpiece is replaced with a mixer that stores periodontal pocket powders (not illustrated), or a periodontal pocket handpiece, and the powders are injected into a periodontal pocket. By the processing of each mode described above, the tooth surface can be cleaned, and plaque, dental calculus, stain, and the like attached to the periodontal pocket can be removed.

The dental calculus and the like attached to the tooth surface can be removed using the dental calculus removing handpiece 15 having the scaler tip 33 attached to a tip of the handpiece. Specifically, the scaler tip 33 to which the ultrasonic vibration is applied is brought into contact with, for example, a subgingival margin, a supragingival margin, and an interdental part of the patient while injecting the water.

### {Cleaning of Equipment of Preventive Dental Device}

In the preventive dental device 100, equipment is cleaned after the use in the treatment or procedure as described above. In particular, in the tooth surface cleaning handpiece 13, it is necessary to clean the flow path so as not to cause clogging in each part such as the powder flow paths which are the internal air feeding path Cᵢₙ and the external air feeding path Cₒᵤₜ through which the powder mixed gas passes, a liquid flow path through which the liquid such as water passes, and the valve disposed in a middle of the flow path in order to control the flow paths. The cleaning of the flow path includes one performed after the treatment or procedure on the patient and one periodically performed, and the former cleaning of the flow path is also referred to as an automatic cleaning process here. The automatic cleaning process is processing automatically performed according to a predetermined sequence, and the processing is started by a user operation such as pressing a button of the display operation unit 17 of the body portion 11. The latter is washing of the liquid feeding path from the body portion 11 to the tooth surface cleaning handpiece 13. For example, when the liquid feeding path is left at an unused state for a long period of time such as on a holiday or at night, various bacteria may grow in the liquid flow path. In order to prevent the growth of bacteria due to such leaving, the hose 12, and the liquid feeding path in the tooth surface cleaning handpiece 13 inside the body portion 11 are washed. The liquid feeding path washing processing includes a chemical solution filling processing in which the liquid feeding path is immersed for a predetermined time in a state of being filled with the chemical solution. Similarly, the liquid feeding path of the dental calculus removing handpiece 15 is also washed to keep the inside of each liquid feeding path clean.

### {Automatic Cleaning Process}

In the cleaning of the equipment of the preventive dental device 100, the automatic cleaning process for the tooth surface cleaning handpiece 13 will be described in detail.

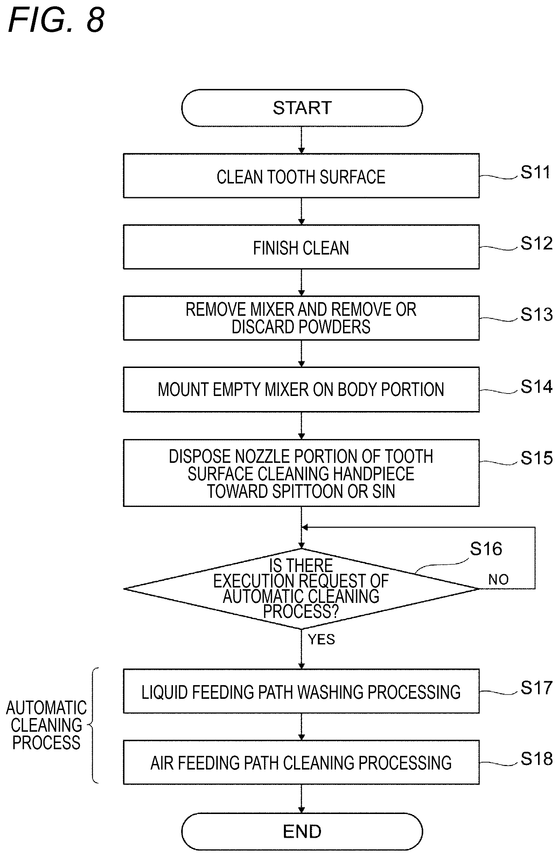

FIG. 8 is a flowchart illustrating a processing procedure from cleaning the tooth surface by the user to executing the subsequent automatic cleaning process. The user cleans the tooth surface of the patient using the tooth surface cleaning handpiece 13 (S11), and starts a preparation work for cleaning the equipment after finishing the cleaning of the tooth surface (S12). In this preparation work, first, the user removes the used mixer 19, and removes or discards the powders remaining in the powder storage portion 47 (S13). Then, an empty mixer 19 containing no powder is mounted on the body portion 11 (S14). Next, in order to discharge the remaining powders, the water, and the like from the nozzle portion 31 of the tooth surface cleaning handpiece 13 during washing, the nozzle portion 31 is disposed toward a spitting receptacle (spittoon) or a sink (S15).

After the preparation work, when the user operates the button of the display operation unit 17 (FIG. 1) to input an execution request of the automatic cleaning process (S16), the control unit 57 starts cleaning the equipment according to the programmed procedure of the automatic cleaning process. Specifically, first, the liquid feeding path washing processing of the liquid flow path in the preventive dental device 100 is performed (S17). The liquid feeding path washing processing is processing of washing the liquid flow path, and supplies the water or the chemical solution contained in the liquid container 23 to the liquid feeding path for a predetermined time by driving the pump P and controlling the control valve VB. When the tap water is supplied to the liquid feeding path instead of from the liquid container 23, the tap water is supplied to the liquid feeding path by opening a plug of a water injection port (not illustrated) of the body portion 11.

Subsequently, the control valve VA is controlled to feed the compressed air toward the tooth surface cleaning handpiece 13. Accordingly, the powders remaining in the powder flow paths of the internal air feeding path Cᵢₙ and the external air feeding path Cₒᵤₜ are discharged outside the tooth surface cleaning handpiece 13. Such an air feeding path cleaning processing is performed for a predetermined time (S18).

By the air feeding path cleaning processing, when the compressed air flows in the powder flow path and the powders remain in the internal air feeding path Cᵢₙ in the mixer 19 or the external air feeding path Cₒᵤₜ outside the body portion 11, the remaining powders can also be discharged from the nozzle portion 31 of the tooth surface cleaning handpiece 13, and the powder clogging in the powder flow paths can be reliably prevented. In addition, the above-described predetermined time is a time that is set in advance in the program and is sufficient for removing the powders remaining in the powder flow paths, and it is possible to solve a problem that the cleaning of the powder flow paths is partially unprocessed due to the variation in time for each user, which is a problem in the related art. The flow path to be washed in the liquid feeding path and the flow path to be cleaned (powder flow path) are independent of each other, and the order of the processing of S17 and S18 may be reversed. In this way, the liquid feeding path washing processing of the tooth surface cleaning handpiece 13 and the dental calculus removing handpiece 15, and the air feeding path cleaning processing of the tooth surface cleaning handpiece 13 are performed.

The control valve VC functions as a stop valve that stops feeding air to the tooth surface cleaning handpiece 13. Therefore, the powder flow path through the tooth surface cleaning handpiece 13 can be cleaned only when the control unit 57 opens the control valve VC.

### {Air Feeding Pattern for Compressed Air in Air Feeding Path Cleaning Processing}

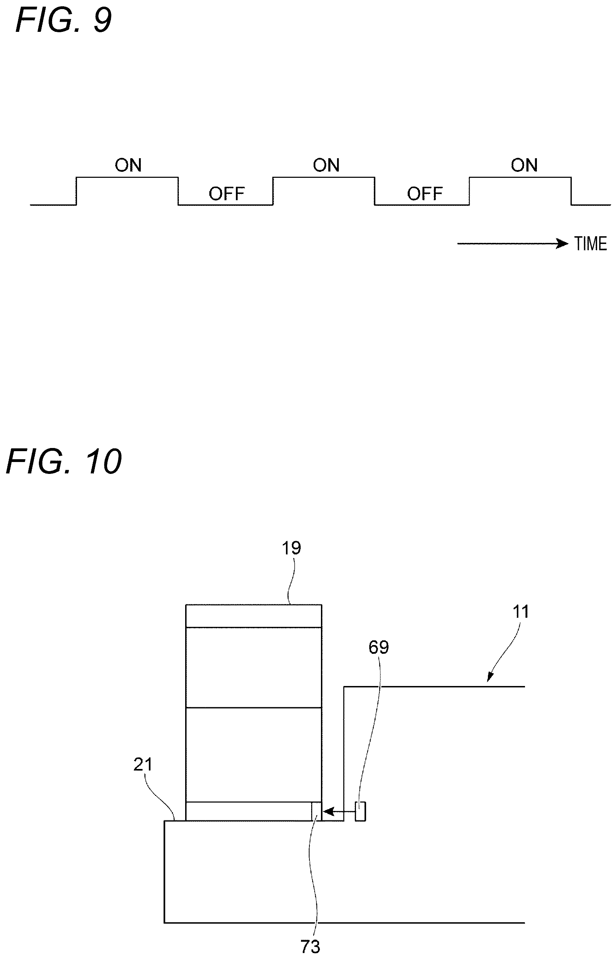

FIG. 9 is a diagram illustrating an on/off pattern for feeding the compressed air in the air feeding path cleaning processing. The air feeding path cleaning processing is preferably performed by an intermittent operation in which an air feeding period Tₒₙ for feeding the compressed air to the internal air feeding path Cᵢₙ and the external air feeding path Cₒᵤₜ as the powder flow paths, and an air feeding stop period T_{off} for stopping feeding the compressed air are repeated. By intermittently feeding the compressed air, pulsation is generated in the compressed air flowing through the internal air feeding path Cᵢₙ and the external air feeding path Cₒᵤₜ, thereby promoting the movement of the powders accumulated in the powder flow paths. In addition, the powders can be efficiently discharged as compared with a case in which the compressed air is continuously fed at a constant flow velocity. A repetition pattern of the air feeding period Tₒₙ and the air feeding stop period T_{off} may be a pattern in which the feeding of the compressed air is repeated a predetermined number of times, for example, by intermittently feeding the compressed air five times, or may be another pattern.

The number of repetitions of feeding the compressed air may be changed depending on types of powders to be used. Examples of the powders to be used include calcium carbonate, sodium bicarbonate, and glycine, the powders have various particle diameters, such as 40 µm and 25 µm, and flow characteristics in the air feeding path may differ depending on the types of powders. Therefore, it is preferred to change the number of repetitions according to the powders to be used. Accordingly, the powders in the air feeding path can be efficiently removed under conditions suitable for various powders having different characteristics such as compositions or particle diameters.

### {Specification of Types of Powders}

The types of powders to be used can be confirmed by the user every time the powders are used, but may be automatically specified by a preventive dental device 100 side. For example, as illustrated in FIG. 7, the individual identifiers 73 are provided for the powder storage portions 47 (individual mixers 19), and the detection unit 69 that detects the identifiers 73 may be provided in the preventive dental device 100. In this case, by storing a correspondence relation between the types of the identifiers 73 and the types of powders corresponding thereto in the correspondence table 71 in advance, the types of powders can be easily and accurately specified based on the detected identifiers 73.

FIG. 10 is a diagram illustrating a state in which the identifier 73 provided in the mixer 19 is detected by the detection unit 69 provided in the body portion 11 of the preventive dental device 100. In this configuration, when the mixer 19 is mounted on the mixer mounting portion 21 of the body portion 11, the identifier 73 provided in the mixer 19 is read by the detection unit 69 based on a command of the control unit 57 illustrated in FIG. 7. Then, the types of powders associated with the read identifiers 73 are obtained with reference to the correspondence table 71, and the types of powders stored in the mixer 19 are specified. Examples of the identifier 73 and the detection unit 69 in this case include a combination of a one-dimensional or two-dimensional barcode and a barcode reader that reads the barcode, and a combination of a wireless tag, such as radio frequency identification (RFID), and a reader that reads the wireless tag.

When the types of powders stored in the mixer 19 are specified, the control unit 57 sets the number of repetitions of the on/off pattern for feeding the compressed air in the above-described air feeding path cleaning processing with reference to the correspondence table 71. In this way, by specifying the types of powders using the identifiers 73, the air feeding path cleaning processing of the powder flow path can be performed under appropriate air feeding conditions according to the types of powders automatically used, and a cleaning effect of the powder flow path can be enhanced.

### {Example of Other Pipe Configuration}

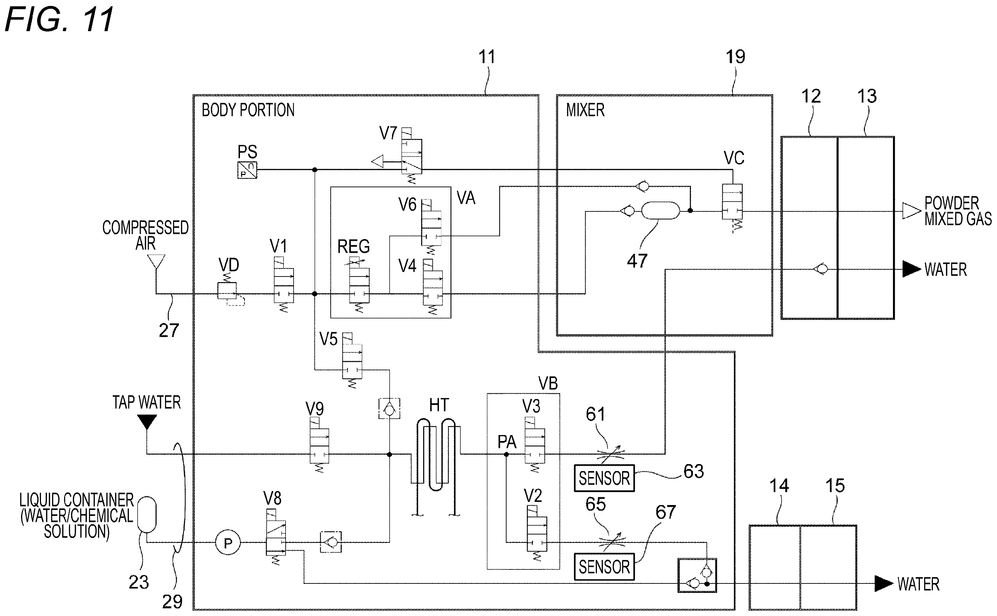

FIG. 11 is a circuit diagram illustrating a pipe configuration in which functional components are added to a basic configuration of the preventive dental device 100 illustrated in FIG. 7. The compressed air supply path 27 that supplies the compressed air into the body portion 11 is provided with a decompression valve VD and an electromagnetic valve V1 between the compressed air supply path 27 and the control valve VA, and the supplied compressed air is decompressed to a desired pressure by the decompression valve VD and supplied to the control valve VA. A supply pressure to the control valve VA is measured by a pressure sensor PS. The control valve VA includes a regulator REG, an electromagnetic valve V4 connected to the powder storage portion 47, and an electromagnetic valve V6 connected to a rinsing flow path. The regulator REG adjusts an air feeding pressure to the mixer 19.

An electromagnetic valve V5 feeds the compressed air to the liquid feeding path after being washed to dry the liquid feeding path. The control valve VC is a pinch valve, and controls opening and closing of the air feeding path by the presence or absence of the compressed air from an electromagnetic valve V7.

In the liquid feeding path, an electromagnetic valve V9 provided in a middle of the flow path for supplying tap water toward the control valve VB in the body portion 11 starts or stops feeding the tap water. In addition, the water or the chemical solution stored in the liquid container 23 is fed to the liquid feeding path in the body portion 11 by driving the pump P. The electromagnetic valve V8 provided at an outlet of the pump P switches a liquid feeding destination of the liquid in the liquid container 23 to either a liquid feeding path toward the control valve VB or a liquid feeding path for discharging the liquid through the dental calculus removing handpiece 15. A heater HT is provided before the flow path of the control valve VB, and the tap water or the liquid from the liquid container 23 is warmed by the heater HT.

The control valve VB switches between a flow path toward the tooth surface cleaning handpiece 13 through the flow rate adjusting valve 61 and a flow path toward the dental calculus removing handpiece 15 through the flow rate adjusting valve 65. The control valve VB includes an electromagnetic valve V3 connected to the flow path toward the tooth surface cleaning handpiece 13 and an electromagnetic valve V2 connected to the flow path toward the dental calculus removing handpiece 15. Although the description is omitted, check valves are respectively provided at positions at which backflow prevention is required in the above circuit. According to this circuit configuration, it is possible to easily control each operation mode of the preventive dental device 100. That is, it is possible to selectively perform a powder mode in which the powder mixed gas is injected together with the water using the tooth surface cleaning handpiece 13, an ultrasonic mode in which the tap water or the water or the like from the liquid container 23 is supplied while ultrasonically vibrating the scaler tip 33 using the dental calculus removing handpiece 15, and a mode in which the above-described automatic cleaning process is performed. With this configuration, the adjustment of the supply pressure of the compressed air, the supply and discharge of the compressed air to and from the air feeding path and the liquid feeding path, and the supply and discharge of the tap water and the liquid in the liquid container 23 to and from the liquid feeding path can be implemented with enhanced convenience and safety.

The present invention is not limited to the above-described embodiments, and modifications, improvements, and the like can be made as appropriate. For example, in the embodiments of the present invention, the configuration of the mixer 19 integrally including the powder storage portion 47, the valve, and the like has been described, but the present invention can also be implemented in a preventive dental device having a configuration in which the valve or the like is provided on a body portion 11 side and only the powder storage portion for storing powders is replaceable. In addition, a material, a shape, a dimension, a numerical value, a form, a number, an arrangement position, and the like of each component in the above-described embodiments are arbitrary and are not limited as long as the present invention can be achieved.

As described above, the following matters are disclosed in the present specification.
(1) A flow path cleaning method for a preventive dental device, the preventive dental device including a mixer configured to feed compressed air to a powder storage portion storing a tooth surface cleaning powder and generate a powder mixed gas containing the powder in the powder storage portion, a handpiece connected to the mixer and having a nozzle portion configured to inject the powder mixed gas fed from the powder storage portion, and a control unit configured to control the feeding of the compressed air to the powder storage portion, the preventive dental device cleaning a tooth surface by injecting the powder mixed gas,
   the method including: an automatic cleaning process including an air feeding path cleaning processing of cleaning an internal air feeding path configured to feed the powder mixed gas from an inside of the powder storage portion and an external air feeding path configured to feed the powder mixed gas fed out from the internal air feeding path to the nozzle portion of the handpiece, in which,
   the method further includes:
      when an execution request of the automatic cleaning process is input to the control unit,
      feeding the compressed air to the powder storage portion from which the stored powder is removed; and
      discharging the compressed air out of the nozzle portion of the handpiece, the compressed air having flowed from the powder storage portion through the internal air feeding path and the external air feeding path.
   According to the flow path cleaning method for a preventive dental device, when the automatic cleaning process is performed, the compressed air is supplied to both the powder flow paths of the internal air feeding path and the external air feeding path through which the powder mixed gas flows, thereby reliably removing residual powder remaining in the internal air feeding path or the external air feeding path after use of the preventive dental device.
(2) The flow path cleaning method for a preventive dental device according to (1), in which
   the compressed air in the automatic cleaning process is fed by an intermittent operation in which an air feeding period and an air feeding stop period are repeated.
   According to the flow path cleaning method for a preventive dental device, pulsation is generated in the compressed air flowing through the internal air feeding path and the external air feeding path, and the powder can be efficiently discharged as compared with a case in which the compressed air is continuously fed at a constant flow velocity.
(3) The flow path cleaning method for a preventive dental device according to (1) or (2), in which
   the preventive dental device further includes a liquid feeding path configured to feed a liquid toward the nozzle portion of the handpiece, and
   the automatic cleaning process includes a liquid feeding path washing processing of discharging the liquid from the nozzle portion through the liquid feeding path.
   According to the flow path cleaning method for a preventive dental device, the liquid feeding path can be kept clean by feeding the liquid to the liquid feeding path.
(4) The flow path cleaning method for a preventive dental device according to any one of (1) to (3), further including:
   reading an identifier that is provided in the powder storage portion and differs for each type of the powder stored in the powder storage portion; and
   changing an air feeding condition of the compressed air for the air feeding path cleaning processing according to the read identifier.
   According to the flow path cleaning method for a preventive dental device, the type of powder to be used can be easily and accurately specified by providing the mixer with the identifier that specifies the type of powder, and detecting the identifier. The remaining powder can be efficiently removed by changing the air feeding condition of the compressed air in the air feeding path cleaning processing according to the type of powder.
(5) The flow path cleaning method for a preventive dental device according to (4), in which
   the air feeding condition includes the number of repetitions of the air feeding period and the air feeding stop period when an operation of feeding the compressed air to the internal air feeding path and the external air feeding path is performed by an intermittent operation of repeating the air feeding period and the air feeding stop period.
   According to the flow path cleaning method for a preventive dental device, the appropriate number of repetitions can be selected according to the type of powder, and an efficiency of removing the powder can be improved.
(6) The flow path cleaning method for a preventive dental device according to (5) in which
   the number of repetitions corresponding to the read identifier is obtained based on a correspondence table in which the number of repetitions in the air feeding path cleaning processing is registered for each type of the identifier.
   According to the flow path cleaning method for a preventive dental device, the number of repetitions suitable for the used powder can be easily determined with reference to the correspondence table in which a correspondence relation between the identifier and the number of repetitions is registered.
(7) The flow path cleaning method for a preventive dental device according to any one of (1) to (6), in which
   the automatic cleaning process is performed after the use of the preventive dental device is completed for each patient.
   According to the flow path cleaning method for a preventive dental device, the automatic cleaning process is performed every time the treatment or procedure on the patient is completed, and thus the preventive dental device can be normally maintained in a state free of powder clogging.
(8) A preventive dental device including:
   a mixer configured to feed compressed air to a powder storage portion storing a tooth surface cleaning powder and generate a powder mixed gas containing the powder in the powder storage portion;
   a handpiece connected to the mixer and having a nozzle portion configured to inject the powder mixed gas fed from the powder storage portion; and
   a control unit configured to control the feeding of the compressed air to the powder storage portion, in which
   the preventive dental device further includes: an internal air feeding path configured to feed the powder mixed gas from an inside of the powder storage portion; and an external air feeding path configured to feed the powder mixed gas fed out from the internal air feeding path to the nozzle portion of the handpiece, and
   the control unit supplies the compressed air to the powder storage portion from which the stored powder is removed, and discharges the compressed air from the powder storage portion through the internal air feeding path and the external air feeding path and out of the nozzle portion of the handpiece, when an execution request of an automatic cleaning process including an air feeding path cleaning processing of cleaning the internal air feeding path and the external air feeding path is input.
   According to the preventive dental device, when the automatic cleaning process is performed, the compressed air is supplied to both the powder flow paths of the internal air feeding path and the external air feeding path through which the powder mixed gas flows, thereby reliably removing the residual powder remaining in the internal air feeding path or the external air feeding path after use of the preventive dental device.
(9) The preventive dental device according to (8), further including:
   a liquid feeding path extending to the nozzle portion of the handpiece; and
   a liquid feeding unit configured to feed a liquid to the liquid feeding path, in which
   the control unit drives the liquid feeding unit to discharge the liquid from the nozzle portion through the liquid feeding path.
   According to the preventive dental device, the liquid feeding path can be kept clean by feeding the liquid to the liquid feeding path.
(10) The preventive dental device according to (8) to (9), in which
   the powder storage portion includes an identifier that differs for each type of the stored powder,
   the preventive dental device further includes a detection unit configured to read the identifier of the powder storage portion, and
   the control unit changes an air feeding condition of the compressed air in the air feeding path cleaning processing according to the read identifier.
   According to the preventive dental device, the type of powder to be used can be easily and accurately specified by providing the mixer with the identifier that specifies the type of powder, and detecting the identifier. The remaining powder can be efficiently removed by changing the air feeding condition of the compressed air in the air feeding path cleaning processing according to the type of powder.
(11) The preventive dental device according to (10), in which
   the air feeding condition includes the number of repetitions of an air feeding period and an air feeding stop period when an operation of feeding the compressed air to the internal air feeding path and the external air feeding path is performed by an intermittent operation of repeating the air feeding period and the air feeding stop period.
   According to the preventive dental device, the appropriate number of repetitions can be selected according to the type of powder, and an efficiency of removing the powder can be improved.
(12) The preventive dental device according to (11), further including:
   a correspondence table in which the number of repetitions in the air feeding path cleaning processing is registered for each type of the identifier, in which
   the control unit obtains the number of repetitions corresponding to the read identifier with reference to the correspondence table.
   According to the preventive dental device, the number of repetitions suitable for the used powder can be easily determined with reference to the correspondence table in which a correspondence relation between the identifier and the number of repetitions is registered in advance.

## Claims

1. A flow path cleaning method for a preventive dental device, the preventive dental device including a mixer configured to feed compressed air to a powder storage portion storing a tooth surface cleaning powder and generate a powder mixed gas containing the powder in the powder storage portion, a handpiece connected to the mixer and having a nozzle portion configured to inject the powder mixed gas fed from the powder storage portion, and a control unit configured to control the feeding of the compressed air to the powder storage portion, the preventive dental device cleaning a tooth surface by injecting the powder mixed gas,
the method comprising: an automatic cleaning process including an air feeding path cleaning processing of cleaning an internal air feeding path configured to feed the powder mixed gas from an inside of the powder storage portion and an external air feeding path configured to feed the powder mixed gas fed out from the internal air feeding path to the nozzle portion of the handpiece,
wherein the method further comprises:
when an execution request of the automatic cleaning process is input to the control unit,
feeding the compressed air to the powder storage portion from which the stored powder is removed; and
discharging the compressed air out of the nozzle portion of the handpiece, the compressed air having flowed from the powder storage portion through the internal air feeding path and the external air feeding path.

2. The flow path cleaning method for a preventive dental device according to claim 1,
wherein the compressed air in the automatic cleaning process is fed by an intermittent operation in which an air feeding period and an air feeding stop period are repeated.

3. The flow path cleaning method for a preventive dental device according to claim 1,
wherein the preventive dental device further includes a liquid feeding path configured to feed a liquid toward the nozzle portion of the handpiece, and
wherein the automatic cleaning process includes a liquid feeding path washing processing of discharging the liquid from the nozzle portion through the liquid feeding path.

4. The flow path cleaning method for a preventive dental device according to claim 1, further comprising:
reading an identifier that is provided in the powder storage portion and differs for each type of the powder stored in the powder storage portion; and
changing an air feeding condition of the compressed air for the air feeding path cleaning processing according to the read identifier.

5. The flow path cleaning method for a preventive dental device according to claim 4,
wherein the air feeding condition includes the number of repetitions of the air feeding period and the air feeding stop period when an operation of feeding the compressed air to the internal air feeding path and the external air feeding path is performed by an intermittent operation of repeating the air feeding period and the air feeding stop period.

6. The flow path cleaning method for a preventive dental device according to claim 5,
wherein the number of repetitions corresponding to the read identifier is obtained based on a correspondence table in which the number of repetitions in the air feeding path cleaning processing is registered for each type of the identifier.

7. The flow path cleaning method for a preventive dental device according to any one of claims 1 to 6,
wherein the automatic cleaning process is performed after the use of the preventive dental device is completed for each patient.

8. A preventive dental device comprising:
a mixer configured to feed compressed air to a powder storage portion storing a tooth surface cleaning powder and generate a powder mixed gas containing the powder in the powder storage portion;
a handpiece connected to the mixer and having a nozzle portion configured to inject the powder mixed gas fed from the powder storage portion; and
a control unit configured to control the feeding of the compressed air to the powder storage portion,
wherein the preventive dental device further comprises: an internal air feeding path configured to feed the powder mixed gas from an inside of the powder storage portion; and an external air feeding path configured to feed the powder mixed gas fed out from the internal air feeding path to the nozzle portion of the handpiece, and
wherein the control unit supplies the compressed air to the powder storage portion from which the stored powder is removed, and discharges the compressed air from the powder storage portion through the internal air feeding path and the external air feeding path and out of the nozzle portion of the handpiece, when an execution request of an automatic cleaning process including an air feeding path cleaning processing of cleaning the internal air feeding path and the external air feeding path is input.

9. The preventive dental device according to claim 8, further comprising:
a liquid feeding path extending to the nozzle portion of the handpiece; and
a liquid feeding unit configured to feed a liquid to the liquid feeding path,
wherein the control unit drives the liquid feeding unit to discharge the liquid from the nozzle portion through the liquid feeding path.

10. The preventive dental device according to claim 8,
wherein the powder storage portion includes an identifier that differs for each type of the stored powder,
wherein the preventive dental device further includes a detection unit configured to read the identifier of the powder storage portion, and
wherein the control unit changes an air feeding condition of the compressed air in the air feeding path cleaning processing according to the read identifier.

11. The preventive dental device according to claim 10,
wherein the air feeding condition includes the number of repetitions of an air feeding period and an air feeding stop period when an operation of feeding the compressed air to the internal air feeding path and the external air feeding path is performed by an intermittent operation of repeating the air feeding period and the air feeding stop period.

12. The preventive dental device according to claim 11, further comprising:
a correspondence table in which the number of repetitions in the air feeding path cleaning processing is registered for each type of the identifier,
wherein the control unit obtains the number of repetitions corresponding to the read identifier with reference to the correspondence table.
